# EUROPEAN PATENT SPECIFICATION

(11) **EP 2 242 720 B1**
(45) Date of publication and mention of the grant of the patent: **28.12.2016**
(21) Application number: 08728111.9
(22) Date of filing: 23.01.2008
(51) Int. Cl.: C01B 33/12, C09C 1/30, B41M 5/50

(54) **DUAL TREATED SILICA, METHODS OF MAKING DUAL TREATED SILICA, AND INKJET RECORDING MATERIALS**
DOPPELT BEHANDELTES SILICIUMDIOXID, VERFAHREN ZUR HERSTELLUNG VON DOPPELT BEHANDELTEM SILICIUMDIOXID UND TINTENSTRAHLAUFZEICHNUNGSMATERIALIEN
SILICE DOUBLEMENT TRAITÉE, PROCÉDÉS DE FABRICATION DE SILICE DOUBLEMENT TRAITÉE ET MATIÈRES D'IMPRESSION PAR JET D'ENCRE

(43) Date of publication of application: 27.10.2010
(73) Proprietor: Hewlett-Packard Development Company, L.P., Houston, TX 77070 (US)
(72) Inventor: COURTENAY, Silke, San Diego CA 92127-1899 (US); BURCH, Eric L., San Diego CA 92127-1899 (US); CHEN, Tao, San Diego CA 92127-1899 (US); ZAHROBSKY, Peter C., San Diego CA 92127-1899 (US); STEICHEN, Christine E., San Diego CA 92127-1899 (US); CHOW, Joseph Sai Him, Fort Collins, Colorado 80528 (US); ROSSING, David P., San Diego CA 92127-1899 (US)
(74) Representative: Rees, Simon John Lewis
(86) International application number: PCT/US2008/051772
(87) International publication number: WO 2009/094023

(56) References cited:
- US-A1- 2005 170 109
- US-A1- 2006 013 971
- US-A1- 2006 062 941
- US-A1- 2006 078 696

## Description

### BACKGROUND

Inkjet printing has become a popular way of recording images on various media surfaces, particularly paper, for a number of reasons, including, low printer noise, capability of high-speed recording, and multi-color recording. Additionally, these advantages of inkjet printing can be obtained at a relatively low price to consumers. While there has been great improvement in inkjet printing, improvements are followed by increased demands from consumers for higher speeds, higher resolution, full color image formation, increased stability, etc.

In recent years, as digital cameras and other digital image collecting devices have advanced, image recording technology has attempted to keep pace by improving inkjet image recording on paper sheets and the like. The desired quality level of the inkjet recorded images ("hard copy") is that of traditional silver halide photography. In other words, consumers would like inkjet recorded images that have the color reproduction, image density, gloss, permanence, durability etc. that is as close to those of silver halide photography as possible.

Traditional recording sheets for the inkjet printing process are not adequate to provide silver halide quality images. Particularly, there is a need to improve ink absorptiveness, ink absorption rate, gloss, image quality, water fastness, and light stability.

### SUMMARY

Briefly described, embodiments of this disclosure include methods of preparing dual treated silica, methods of preparing a photobase porous medium, photobase porous media, are disclosed. The method of preparing dual treated silica includes: mixing aluminum chloride hydrate (ACH) and an aminosilane in an aqueous solution to form a first mixture; mixing a low surface area silica with the first mixture to form a second mixture; dispersing the second mixture; and heating the second mixture to produce a third mixture. Aminosilane is also referred to as organosilane herein. The organosilane includes primary amines, secondary amines, tertiary amines, and/or squaternary amines. The present disclosure provides a method of preparing dual treated silica according to claim 1, a method of preparing a photobase porous medium according to claim 6, and a photobase porous medium according to claim 12.

### BRIEF DESCRIPTION OF THE DRAWINGS

Many aspects of this disclosure can be better understood with reference to the following drawings. The components in the drawings are not necessarily to scale. Moreover, in the drawings, like reference numerals designate corresponding parts throughout the several views.
FIG. 1 illustrates embodiments of compounds that can be used in embodiments of the present disclosure.
FIGS. 2-5 illustrate embodiments of compounds that can be used in embodiments of the present disclosure.
FIG. 6 illustrates cross-section of an embodiment of a photobase porous medium.

### DETAILED DESCRIPTION

Embodiments of the present disclosure will employ, unless otherwise indicated, techniques of synthetic organic and inorganic chemistry, ink chemistry, media chemistry, and the like, that are within the skill of the art. Such techniques are explained fully in the literature.

The following examples are put forth so as to provide those of ordinary skill in the art with a complete disclosure and description of how to perform the methods and use the compositions disclosed and claimed herein. Efforts have been made to ensure accuracy with respect to numbers (e.g., amounts, temperature, etc.) but some errors and deviations should be accounted for. Unless indicated otherwise, parts are parts by weight, temperature is in °C, and pressure is at or near atmospheric. Standard temperature and pressure are defined as 20 °C and 1 atmosphere.

Before the embodiments of the present disclosure are described in detail, it is to be understood that, unless otherwise indicated, the present disclosure is not limited to particular materials, reagents, reaction materials, manufacturing processes, or the like, as such can vary. It is also to be understood that the terminology used herein is for purposes of describing particular embodiments only, and is not intended to be limiting.

It must be noted that, as used in the specification and the appended claims, the singular forms "a," "an" and "the" include plural referents unless the context clearly dictates otherwise. Thus, for example, reference to "a support" includes a plurality of supports. In this specification and in the claims that follow, reference will be made to a number of terms that shall be defined to have the following meanings unless a contrary intention is apparent.

### Discussion

Embodiments of the present disclosure provide for dual treated silica, methods for forming dual treated silica, dual treated silica layers or coatings, photobase porous media including the dual treated silica layers or coatings, methods of making photobase porous media including the dual treated silica layers or coatings, and the like.

Embodiments of the present disclosure include a number of advantages. Embodiments of the dual treated silica include the use of a low surface area silica, which allows for a dispersion including the low surface area silica to be prepared with higher percent solids than other dispersions. The higher percent solids results in a higher percent solids in the dual treated silica formulation or coating. In addition, the dual treated silica formulation or coating can be applied at higher coating speeds relative to other coatings. Furthermore, the dual treated silica layer formulation or coating can be converted at higher speeds than other coatings. The larger silica particle size allows the coating to be applied at lower coat weight than coatings using smaller silica particles due to the increased capacity of the lower surface area silica. The reduced coat weight also contributes to a lower propensity to cracking. Also, the amount of binder needed is reduced. Each of these advantages leads to reduced cost relative to other coatings. In addition, the photobase porous media still have good gloss, coalescence, waterfastness, and pigment ink absorption, as well as improved ink adhesion and gloss uniformity with pigmented inks. Although embodiments of the present disclosure are designed for use with pigment inks, dye inks can be used with acceptable results.

As mentioned above, embodiments of the present disclosure provide for a photobase porous media that includes a substantially inorganic particulate-containing coated media having surface voids and/or cavities capable of taking in the ink-jet inks in accordance with embodiments of the present disclosure. The photobase porous media includes a photobase support and a dual treated silica layer. As ink is printed on the photobase porous media, the ink can fill the voids and the outermost surface can become dry to the touch in a more expedited manner as compared to traditional or swellable media.

As mentioned above, embodiments of the present disclosure include a photobase porous media that includes a photobase support. In particular, the photobase support includes a photobase material including a highly sized paper extruded with a layer of polyethylene on both sides. In this regard, the photobase support is an opaque water-resistant material exhibiting qualities of silver halide paper. In an embodiment, the photobase support includes a polyethylene layer having a thickness of about 10 to 24 grams per square meter (g/m²).

In another embodiment, the photobase support can be made of transparent or opaque photographic material. In particular, the photobase support can include, but is not limited to, clear films. The clear films can be made of materials such as, but not limited to, cellulose esters, including cellulose triacetate, cellulose acetate, cellulose propionate, or cellulose acetate butyrate, polyesters, including poly(ethylene terephthalate), polyimides, polycarbonates, polyamides, polyolefins, poly(vinyl acetals), polyethers, polyvinyl chloride, and polysulfonamides. The opaque photographic materials can include, but is not limited to, baryta paper, polyethylene-coated papers, and voided polyester.

In another embodiment, the photobase support can be made of non-photographic materials (e.g., transparent films). In particular, the non-photographic materials can include, but are not limited to, polyesters, diacetates, triacetates, polystyrenes, polyethylenes, polycarbonates, polymethacrylates, cellophane, celluloid, polyvinyl chlorides, polyvinylidene chlorides, polysulfones, and polyimides.

In another embodiment, the photobase support can be made of plain paper of various different types, including, but not limited to, pigmented papers and cast-coated papers, as well as metal foils, such as foils made from alumina.

The photobase support is coated on at least one surface with a composition including the dual treated silica. The dual treated silica is formed by mixing aluminum chloride hydrate (ACH) and an organosilane to form a first mixture, which are then immediately dispersed with a low surface area silica. The term "immediately dispersed" means that the ACH and organosilane are mixed for a period no longer than 15 minutes or no longer than 10 minutes prior to addition of the low surface area silica so that the ACH and organosilane do not react or do not substantially react with one another. Details regarding this process will be discussed in more detail below. The silica is then "converted" or "reacted" with the ACH and organosilane for a time period of 60-120 min at 60 to 80 °C. The dual treated silica can then be mixed with components such as, but not limited to, binders, surfactants, plasticizers, and binder cross-linkers, to form a dual treated silica layer or coating to be applied to the photobase support to form the photobase porous medium.

The low surface area silica can have an average primary particle size of about 14 to 16 nanometers. The Brunauer-Emmett-Teller (BET) surface area of the fumed silica is about 125 to 180 square meters per gram (m²/g). The zeta potential, or the electrokinetic measurement used to control the stability of a colloid, of the organic treated silica at a pH of 4.5 is less than 50% of the maximum if used without the aminosilane. In particular, the zeta potential is about 30 to 45 mV. The molar ratio of ACH relative to low surface area silica is about 0.5-1.5%, preferably about 0.7-1.0%, and more preferably about 1.0-1.4% based on the molar weight of the low surface area silica. The molar ratio of organosilane relative to low surface area silica is about 1.0-2.0%, preferably about 1.3-1.5%, and more preferably about 1.7-2.0% based on the molar weight of the low surface area silica.

ACH performs a surface activating function. ACH provides an inorganic means of adding positive surface charge to the low surface area silica. It should be noted that not all negatively charged moieties are converted to positive, but that the net charge of the entire surface is generally positive.

As used herein, "aluminum chloride hydrate," "ACH," "polyaluminum chloride," "PAC," "polyaluminum hydroxychloride," and the like, refers to a class of soluble aluminum products in which aluminum chloride has been at least partly reacted with a base. The relative amount of OH⁻, compared to the amount of Al, can determine the basicity of a particular product. The chemistry of ACH is often expressed in the form Alₙ(OH)ₘCl₍₃ₙ₋ₘ₎, wherein n can vary from 1 to 50, and m may vary from 1 to 150. An exemplary stable ionic species in ACH can have the formula [Al₁₂(OH)₂₄AlO₄(H₂O)₁₂]⁷⁺. Examples of the above mentioned aluminum chlorohydrate (ACH) may be commercially found under the names Aloxicoll, Aluminol ACH, Aquarhone, Cartafix LA, Ekoflock 90, GenPac 4370, Gilufloc 83, Hessidrex WT, HPB 5025, Hydral, Hydrofugal, Hyper Ion 1026, Hyperdrol, Kempac 10, Kempac 20, Kemwater PAX 14, Locron, Locron P, Locron S, Nalco 8676, Prodefloc, and Sulzfloc JG. The ACH is about 2 wt % to 4 wt % of the dual treated silica. The weight ratio of ACH to organosilane is 1:1 to 1:3. In an embodiment, when the organosilane is 3-aminopropyltrimethoxysilane the weight ratio is about 1:2.8 or preferably about 1:1.7.

The organosilane performs at least two functions in the present dual treated silica. Specifically, the added organosilane works as a base to neutralized the ACH and increases the pH of the dual treated silica. Additionally, in an embodiment, if organosilane is used to neutralize ACH, the organosilane may also be used to add additional positively charged moieties to the surface of the silica. More specifically, the ammonium ion of the organosilane will carry a positive charge. Although not intending to be bound by theory, the orgaonosilane is bonded to the silica surface. In this regard, the positive charge on the ammonium will be used to stabilize the silica dispersion by increasing the zeta potential of the silica particles. As a result, the organosilane is also used to modify the silica surface, thereby increasing the stability of the resulting dispersion.

Furthermore, the organosilane reagent can be added to the dual treated silica to provide one or more functions at or near the surface. In this regard, the functions can include one or more of the following: ultraviolet absorber, chelating agent, hindered amine light stabilizer, reducing agent, hydrophobic group, ionic group, buffering group, or functionality for a subsequent reaction.

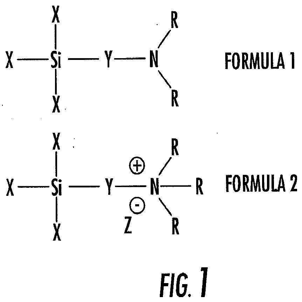

The organosilane can include a functional moiety (or portion of the organosilane that provides desired modified properties to an inorganic particulate surface), which is covalently attached to a silane coupling group. In particular, the organosilane includes a monoamino functional group as defined as formula (1) and (2), as shown in FIG. 1 (also known as monoaminoorganosilanes). It should be noted that X is a halogen, alkoxy, or hydroxyl group configured to attach to the inorganic particulates. Y is a linking group containing from 1 to 20 carbons. Y can be linear or branched hydrocarbons including alkyl, alkylaromatic, substituted aromatic, and can also contain functional groups like ether, urea, urethane, ester, ketone, carbonate, sulfonate, sulfone, and sulfonamide. Y can also be a polyethyleneoxide, a polypropylene oxide, a polyethyleneimine. R can be one of, but is not limited to, hydrogen, alkyl (C1 to C20, linear or branched primary, secondary or tertiary), cyclic alkyl, hydroxyalkyl, chloroalkyl, phenyl, substituted phenyl, and the like. Z is counterion and can be a halogen (F, Cl, Br, I), a hydroxyl, a methylsulfate, a tosylate, an acetate, an alkylcarboxylate, or a perchlorate.

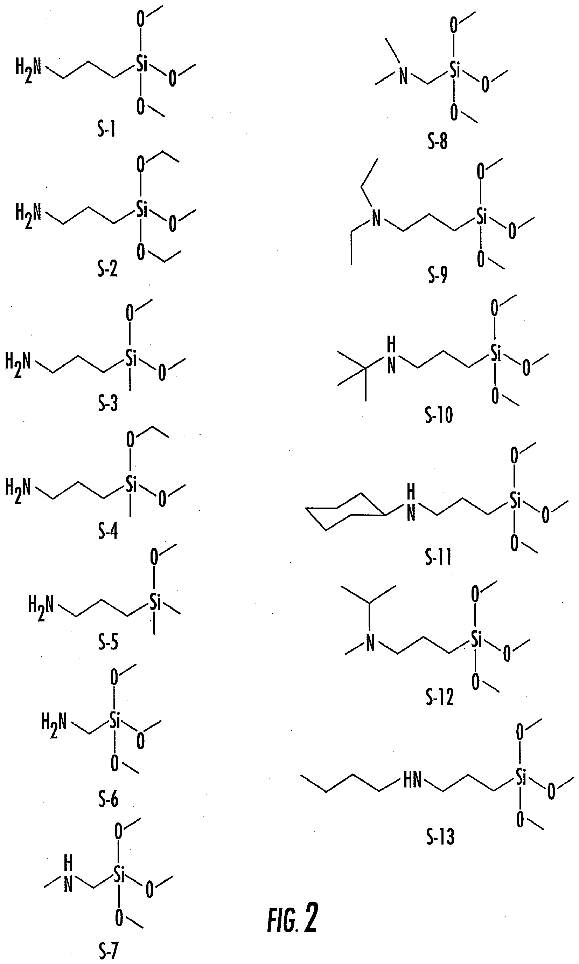

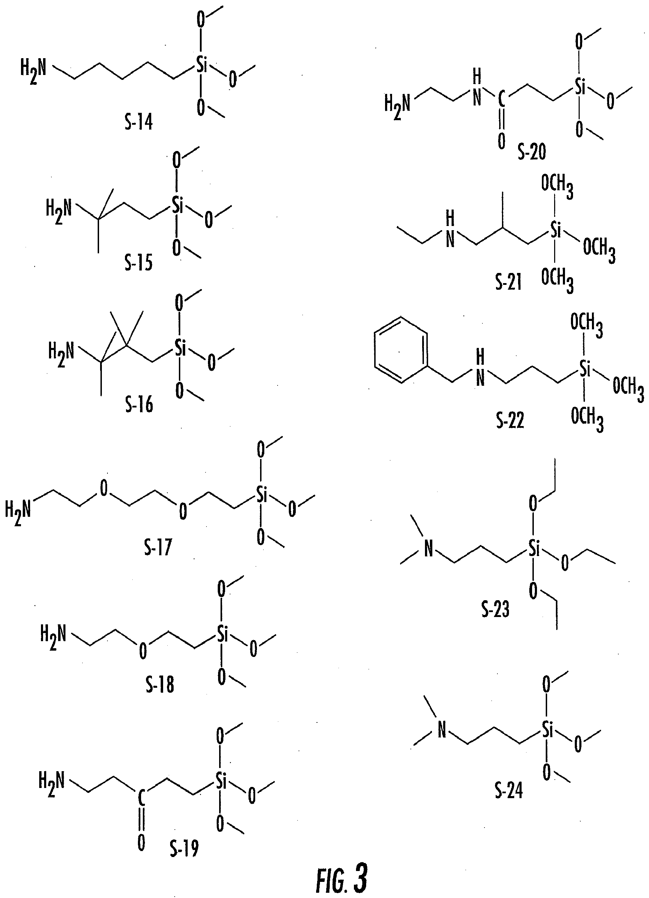

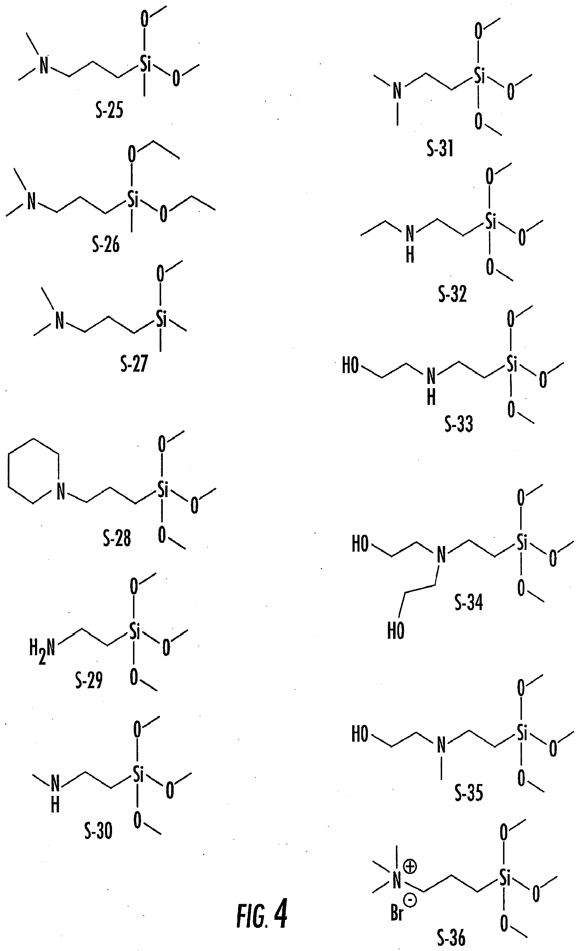

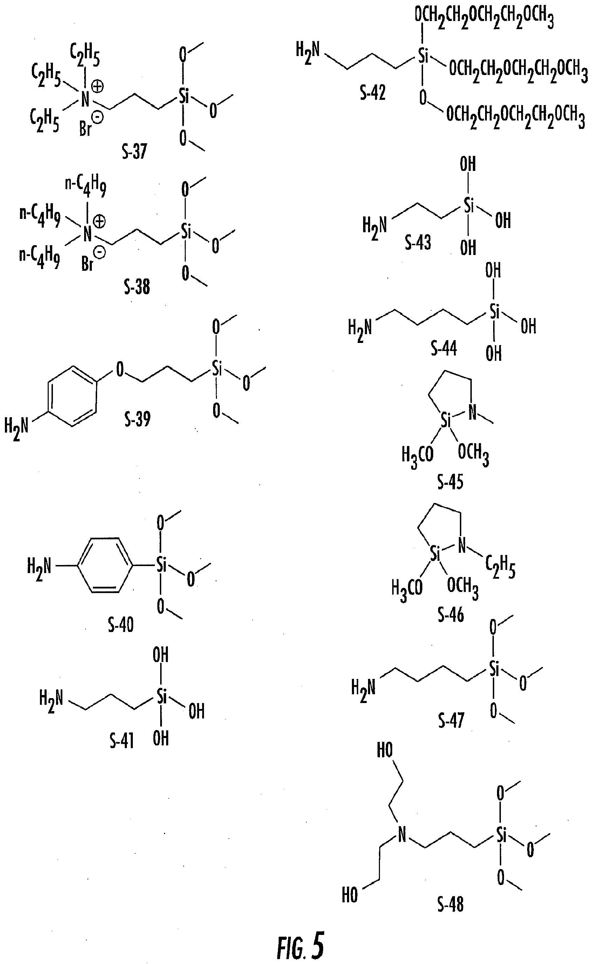

Exemplar embodiments of organosilanes include, but are not limited to, those shown in FIGS. 2-5. FIGS. 2-5 are exemplar structures of organosilanes (silane ID Nos. S1-S48), where S1 and S2 are preferred embodiments.

In an embodiment, the organosilane can include, but is not limited to, primary amine, a secondary amine, a tertiary amine, and/or a quaternary amine. In general, the organosilane can include, but is not limited to, 3-aminopropyltriethoxysilane and 3-aminopropyltrimethoxy-silane, N-methylaminopropyltrimethoxysilane, N-ethylaminopropyltrimethoxysilane, N-propylaminopropyltrimethoxysilane, N-butylaminopropyltrimethoxysilane, (N, N-diethyl-3-aminopropyl) trimethoxysilane, (N, N-dimethylaminopropyl) trimethoxysilane, Bis(2-hydroxyethyl)-3-aminopropyltriethoxysilane, N-(hydroxyethyl) N-methylaminopropyltrimethoxysilane, and N-trimethoxysilylpropyl-N,N,N-trimethylammonium chloride.

The dual treated silica can be formed by an in situ process. First, the ACH and the organosilane are simultaneously mixed in an aqueous solution to form a first mixture. The pH of the first mixture is less than 9.2. The pH can be adjusted using an acid such as, but not limited to, acetic acid or HCl. The weight ratio of ACH to organosilane is 1:1 to 1:3. In an embodiment, when the organosilane is 3-aminopropyltrimethoxysilane, the weight ratio is about 1:2.8 or preferably about 1:1.7.

Next, the low surface area silica is immediately dispersed into the first mixture to form a second mixture. The low surface area silica has a surface area of about 125 to 180 m²/g. The second mixture can be dispersed using a dispersion system such as, but not limited to, a Ystral disperser (e.g., slot width of 4 mm or less) (Ystral GmbH, Ballrechten-Dottingen, Germany), a Kady mill (Kady International, Scarborough, ME, USA), and the like. The dispersion percentage of solids is greater than 27%. The dispersion is stable for at least 30 days without a significant change in the viscosity.

After dispersion, the second mixture is heated for about 1 to 2 hours at about 60 to 80° C, preferably about 60 to 70° C, and more preferably about 70 to 80° C to produce a third mixture. The third mixture is about 27 to 35 or preferably about 28 to 32 % weight of solids and has a viscosity of about 50 to 200 cP at 35° C.

The dual treated silica can be used to form a dual treated silica layer or coating for disposing on a photobase substrate to form the porous photobase medium. The dual treated silica can be mixed with binders, cross-linkers, mordants, surfactants, buffers, plasticizers, and/or other additives, to form the dual treated silica layer. The binders can include, but are not limited to, polyvinylalcohol (PVA) with % hydrolysis from approximately 70 to 99%, derivatized polyvinylalcohol (cationic, acetoacetylated, etc.), copolymer of polyvinylalcohol and poly(ethylene oxide), gelatin, polyvinylpyrrolidone, low Tg synthetic polymer latex, and mixtures thereof. The binder is about 15 to 20 weight percent of the dual treated silica layer or preferably about 16 to 19 weight percent of the dual treated silica layer.

The cross-linker can include, but is not limited to, boric acid (Aldrich), glyoxal (Berset™), melamine formaldehyde resin (Cymel™), and the like. The cross-linker can be about 1 to 4 weight percent of the dual treated silica layer or preferably about 2 to 3 weight percent of the dual treated silica layer.

The mordant may be a cationic polymer, such as a polymer having a primary amino group, a secondary amino group, a tertiary amino group, a quaternary ammonium salt group, or a quaternary phosphonium salt group. The mordant may be in a water-soluble form or in a water-dispersible form, such as in latex.

The water-soluble cationic polymer may include, but is not limited to, a polyethyleneimine, a polyallylamine, a polyvinylamine, a dicyandiamide-polyalkylenepolyamine condensate, a polyalkylenepolyamine-dicyandiamideammonium condensate, a dicyandiamide-formalin condensate, an addition polymer of epichlorohydrin-dialkylamine, a polymer of diallyldimethylammoniumchloride ("DADMAC"), a copolymer of diallyldimethylammoniumchloride-SO₂, polyvinylimidazole, polyvinypyrrolidone, a copolymer of vinylimidazole, polyamidine, chitosan, cationized starch, polymers of vinylbenzyltrimethylqammoniumchloride, (2-methacryloyloxyethyl)trimethyl-ammonium chloride, and polymers of dimethylaminoethylmethacrylate. Examples of the water-soluble cationic polymers that are commercially available in latex form and are suitable as mordants are Rhoplex™ Primal-26 (available from Rohm and Haas Co. (Philadelphia, Pa.)). It should also be noted that cationic polymers having a lesser degree of water-solubility could be used in the ink-receiving layer 4 by dissolving them in a water-miscible organic solvent.

A metal salt, such as a salt of an organic or inorganic acid, an organic metal compound, or a metal complex, may also be used as the mordant. The aluminum salt may include, but is not limited to, aluminum fluoride, hexafluoroaluminate (for example, potassium salts), aluminum chloride, basic aluminum chloride (polyaluminum chloride), tetrachloroaluminate (for example, sodium salts), aluminum bromide, tetrabromoaluminate (for example, potassium salts), aluminum iodide, aluminate (for example, sodium salts, potassium salts, and calcium salts), aluminum chlorate, aluminum perchlorate, aluminum thiocyanate, aluminum sulfate, basic aluminum sulfate, aluminum sulfate potassium (alum), ammonium aluminum sulfate (ammonium alum), sodium sulfate aluminum, aluminum phosphate, aluminum nitrate, aluminum hydrogenphosphate, aluminum carbonate, polyaluminum sulfate silicate, aluminum formate, aluminum diformate, aluminum triformate, aluminum acetate, aluminum lactate, aluminum oxalate, aluminum isopropionate, aluminum butyrate, ethyl acetate aluminum diisopropionate, aluminum tris(acrylacetonate), aluminum tris(ethylacetoacetate), and aluminum monoacetylacetonate-bis(ethylaceto-acetate). Preferably, the mordant is a quaternary ammonium salt, such as a DADMAC derivative; an aluminum salt, such as aluminum triformate or aluminum chloride hydrate; or a cationic latex that includes quaternary ammonium functional groups. These are commercially available from numerous sources, such as BASF Corp. (Mount Olive, N.J.), or Ciba Specialty Chemicals (Basel, Switzerland).

In an embodiment, the mordant is about 0.01 to 4 weight percent of the dual treated silica layer or preferably about 0.01 to 2 weight percent of the dual treated silica layer.

The percent solid of the dual treated silica layer is about 19 to 26 % solid in the dual treated silica layer or preferably about 21 to 24 % solid in the dual treated silica layer. The dual treated silica layer has a viscosity of about 300 to 500 cP at 45° C or preferably about 250-400 cP at 45° C. The dual treated silica formulation is stable for a minimum of 2 days, while the viscosity is stable for a minimum of 3 weeks.

The dual treated silica formulation can be coated onto the photobase substrate by any number of material dispensing machines and/or methods including, but not limited to, a slot coater, a curtain coater, a cascade coater, a blade coater, a rod coater, a gravure coater, a Meier rod coater, a wired coater, and the like.

The dual treated silica layer can be coated about 15 g/m² to 30 g/m² or preferably about 19 to 24 g/m². The coating speed applied by a curtain coating method is limited by a variety of factors including the drying, but in general can be 50-100% faster for lower surface area silica than higher surface area silica. Once the dual treated silica layer is disposed on the photobase substrate, the coated photobase substrate can potentially also be converted or slit at greater speeds than higher surface area silica coatings.

Embodiments of the present disclosure can include a top gloss enhancement layer disposed on the dual treated silica layer. The top gloss enhancement layer can include spherical colloidal silica, boehmite alumina, a surfactant, and a binder. The spherical colloidal silica can have a particle size of about 40 to 250 nm or preferably about 40 to 80 nm. The boehmite alumina can have a dispersed particle size of about 160-180 nm. The weight ratio of colloidal silica to boehmite alumina can be about 1:1 to 1:3. The amount of binder included depends, at least in part, upon the coat weight of the top gloss enhancement layer.

The top gloss enhancing layer coat weight is about 0.2 to 0.6 g/m², resulting in a top gloss enhancement layer having a thickness of about 0.10 to 3.0 micrometers. The thickness range of the top gloss enhancement layer is based on the following considerations: gloss, ink absorptivity, and the like. In particular, fast ink absorptivity and the lower end of the above-mentioned range is preferred. For higher gloss, the higher end of the above-mentioned range is preferred.

The top gloss enhancing layer can be applied using wet-on-wet application process. In particular, the top gloss enhancing layer may be applied by any number of coating apparatuses including, but not limited to, a multi slot applicator, a curtain applicator, or a cascade coating applicator.

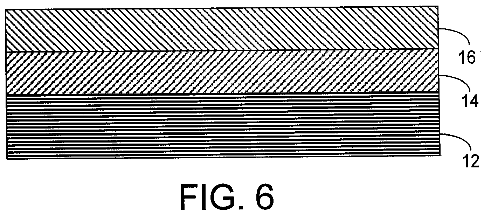

FIG. 6 is a cross-section of a photobase porous medium 10. The photobase porous medium 10 includes a photobase support 12, a dual treated silica layer or coating 14, and, optionally, a top gloss enhancing layer 16. It should be noted that the photobase porous medium 10 can include one or more additional layers disposed amount one or more of the noted layers.

### Examples

Now having described the embodiments of the present disclosure, in general, the following Examples describe some additional embodiments of the present disclosure. While embodiments of present disclosure are described in connection with the following examples and the corresponding text and figures, there is no intent to limit embodiments of the present disclosure to this description. On the contrary, the intent is to cover all alternatives, modifications, and equivalents included within the scope of embodiments of the present disclosure.

### Example 1

In an embodiment, the dual treated silica can be made using the following steps. First, deionized water was added to a reaction vessel. Then, ACH (174.5g/mol) is added to the deionized water and mixed until completely dissolved. Next, the aminosilane (MW is based on aminosilane used i.e., for aminopropyltrimethoxysilane the MW is 179g/mol) is added to the mixture and the pH is adjusted if it is above 9.2. Immediately (less than about 15 or 10 minutes) after the aminosilane is added, the low surface area silica (e.g., Cabot LM130, Cabot LM150 Cabot LM175, Orisil 150, Aerodisp 130, or Aerodisp 150) is added to the mixture and dispersed under high shear mixing employing a Kady or Ystral type rotor stator dispersing unit. The term "high shear" means a 50-70 Hz setting on a Ystral dispersing unit. After dispersion is complete, the silica is converted at about 60-80° C for 1-2 hours under low shear mixing. The term "low shear" means a 10-25 Hz setting on a Ystral dispersing unit. Subsequently, the dispersion is cooled to room temperature and appropriate additives (e.g., crosslinker, plasticizer, surfactant, and the like) can be added to this mixture. Next, a binder is mixed with the mixture to form the dual treated silica.

Table 1 shows a number of illustrative embodiments of the present disclosure.

**Table 1**

| ACH: aminosilane weight ratio | Binder amount in percent based on silica | glycerol in percent based on silica | results |
|---|---|---|---|
| 1:1.7 | 16 | 1.5 | Cracking, but good IQ |
| 1:1.7 | 17 | 1.5 | Minor cracking in dry conditions, good IQ |
| 1:1.7 | 18 | 1.5 | No cracking, good IQ |
| 1:3 | 18 | 1.5 | No cracking, great IQ |
| 1:3 | 18 | 3 | No cracking, coalescence |
| 1:1 | 18 | 1.5 | Some coating defects |

It should be noted that ratios, concentrations, amounts, and other numerical data may be expressed herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "about 0.1 % to about 5%" should be interpreted to include not only the explicitly recited concentration of about 0.1 wt% to about 5 wt%, but also include individual concentrations (*e.g.,* 1%, 2%, 3%, and 4%) and the sub-ranges (*e.g.,* 0.5%, 1.1%, 2.2%, 3.3%, and 4.4%) within the indicated range. The term "about" can include ±1%, ±2%, ±3%, ±4%, ±5%, ±6%, ±7%, ±8%, ±9%, or ±10%, or more of the numerical value(s) being modified. In addition, the phrase "about 'x' to 'y'" includes "about 'x' to about 'y"'. The term "consisting essentially of" is defined to include a formulation that includes the inks or dyes specifically mentioned as well as other components (*e.g.,* solvents, salts, buffers, biocides, binders, an aqueous solution) using in an ink formulation, while not including other dyes or inks not specifically mentioned in the formulation.

## Claims

1. A method of preparing dual treated silica, comprising:
mixing aluminum chloride hydrate (ACH) and an aminosilane in an aqueous solution to form a first mixture, wherein the weight ratio of ACH to aminosilane is 1:1 to 1:3;
mixing a low surface area silica with the first mixture to form a second mixture, wherein the low surface area silica has a surface area of 125 to 180 m²/g;
dispersing the second mixture; and
heating the second mixture for 1 to 2 hours at 60 to 80° C to produce a third mixture having 28-32 % weight of solid and a viscosity of 50 to 200 cP (0.05 to 0.2 Pa s) at 45° C.

2. The method of claim 1, wherein the molar ratio of ACH relative to the low surface area silica is 0.5-1.5 % based on the molar weight of the low surface area silica.

3. The method of claim 1, wherein the molar ratio of monoaminoorganosilane relative to low surface area silica is 1.0-2.0 % based on the molar weight of the low surface area silica.

4. The method of claim 1, wherein the molar ratio of ACH relative to the low surface area silica is 1.0-1.4 % based on the molar weight of the low surface area silica; and wherein the molar ratio of monoaminoorganosilane relative to low surface area silica is 1.7-2.0 % based on the molar weight of the low surface area silica.

5. The method of claim 1, wherein the aminosilane is selected from: 3-aminopropyltriethoxysilane and 3-aminopropyltrimethoxy-silane, N-methylaminopropyltrimethoxysilane, N-ethylaminopropyltrimethoxysilane, N-propylaminopropyltrimethoxysilane, N-butylaminopropyltrimethoxysilane, (N, N-diethyl-3-aminopropyl) trimethoxysilane, (N, N-dimethylaminopropyl) trimethoxysilane, Bis(2-hydroxyethyl)-3-aminopropyltriethoxysilane, N-(hydroxyethyl) N-methylaminopropyltrimethoxysilane, or N-trimethoxysilylpropyl-N,N,Ntrimethylammonium chloride.

6. A method of preparing a photobase porous medium, comprising:
mixing aluminum chloride hydrate (ACH) and an aminosilane in an aqueous solution to form a first mixture, wherein the weight ratio of ACH to aminosilane is 1:1 to 1:3;
mixing a low surface area silica with the first mixture to form a second mixture, wherein the low surface area silica has a surface area of 125 to 180 m²/g;
dispersing the second mixture;
heating the second mixture for 1 to 2 hours at 60 to 80° C to produce a third mixture having 28-32 % weight of solid;
mixing the third mixture with components selected from binders, additives, and combinations thereof to form a fourth mixture having a viscosity of 300 to 500 cP (0.3 to 0.5 Pa s) at 45° C, wherein the fourth mixture is 20 to 25% by weight solids;
applying the fourth mixture to a base substrate to a thickness of 15 to 30 g/m²; and
converting the base substrate having the layer of the fourth mixture into the photobase porous medium.

7. The method of claim 6, wherein applying the fourth mixture includes applying the fourth mixture to a base substrate to a thickness of 15 to 25 g/m².

8. The method of claim 6, wherein the molar ratio of ACH relative to the low surface area silica is 0.5-1.5 % based on the molar weight of the low surface area silica.

9. The method of claim 6, wherein the molar ratio of monoaminoorganosilane relative to low surface area silica is 1.0-2.0 % based on the molar weight of the low surface area silica.

10. The method of claim 6, wherein the molar ratio of ACH relative to the low surface area silica is 1.0-1.4 % based on the molar weight % of the low surface area silica; and wherein the molar ratio of monoaminoorganosilane relative to low surface area silica is 1.7-2.0 % based on the molar weight of the low surface area silica.

11. The method of claim 6, wherein the aminosilane is selected from: 3-aminopropyltriethoxysilane and 3-aminopropyltrimethoxy-silane, N-methylaminopropyltrimethoxysilane, N-ethylaminopropyltrimethoxysilane, N-propylaminopropyltrimethoxysilane, N-butylaminopropyltrimethoxysilane, (N, N-diethyl-3-aminopropyl) trimethoxysilane, (N, N-dimethylaminopropyl) trimethoxysilane, Bis(2-hydroxyethyl)-3-aminopropyltriethoxysilane, N-(hydroxyethyl) N-methylaminopropyltrimethoxysilane, or N-trimethoxysilylpropyl-N,N,Ntrimethylammonium chloride

12. A photobase porous medium comprising:
a dual treated silica layer, wherein the dual treated silica layer has a viscosity of 300 to 500 cP (0.3 to 0.5 Pa s) at 45° C, wherein the dual treated silica layer has a thickness of 15 g/m² to 30 g/m², wherein the dual treated silica layer includes:
a dual treated silica, wherein the dual treated silica is a dual treated low surface area silica, wherein the low surface area silica has a surface area of 125 to 180 m²/g, wherein the dual treated silica is 19 to 26 % solid in the dual treated silica layer;
a binder, wherein the binder is 15 to 20 weight percent of the dual treated silica layer; and
a cross-linker, wherein the cross-linker is 1 to 4 weight percent of the dual treated silica layer.

13. The photobase porous medium of claim 12, further comprising a top gloss enhancement layer disposed on the dual treated silica layer, wherein the top gloss enhancement layer has a thickness of 0.2 to 0.6 g/m².

14. The photobase porous medium of claim 12, wherein the molar ratio of ACH relative to the low surface area silica is 0.5-1.5 % based on the molar weight of the low surface area silica.

15. The photobase porous medium of claim 12, wherein the molar ratio of monoaminoorganosilane relative to low surface area silica is 1.0-2.0 % based on the molar weight of the low surface area silica.

16. The photobase porous medium of claim 12, wherein the molar ratio of ACH relative to the low surface area silica is 1.0-1.4 % based on the molar weight % of the low surface area silica; and wherein the molar ratio of monoaminoorganosilane relative to low surface area silica is 1.7-2.0 % based on the molar weight of the low surface area silica.

## Patentansprüche

1. Verfahren zum Herstellen von zweifach behandeltem Siliciumdioxid, Folgendes umfassend:
Mischen eines Aluminiumchloridhydrats (ACH) und eines Aminosilans in einer wässrigen Lösung, um eine erste Mischung auszubilden, wobei das Gewichtsverhältnis von ACH zu Aminosilan 1:1 bis 1:3 beträgt;
Mischen eines Siliciumdioxids mit geringer Oberfläche mit der ersten Mischung, um eine zweite Mischung auszubilden, wobei das Siliciumdioxid mit geringer Oberfläche eine Oberfläche von 125 bis 180 m²/g aufweist;
Dispergieren der zweiten Mischung; und
Erwärmen der zweiten Mischung 1 bis 2 Stunden lang bei 60 bis 80 °C, um eine dritte Mischung mit 28-32 Gew.-% Feststoff und einer Viskosität von 50 bis 200 cP (0,05 bis 0,2 Pa·s) bei 45 °C auszubilden.

2. Verfahren nach Anspruch 1, wobei das Molverhältnis von ACH relativ zu dem Siliciumdioxid mit geringer Oberfläche 0,5-1,5 % bezogen auf das Molgewicht des Siliciumdioxids mit geringer Oberfläche ist.

3. Verfahren nach Anspruch 1, wobei das Molverhältnis von Monoaminoorganosilan relativ zu Siliciumdioxid mit geringer Oberfläche 1,0-2,0 % bezogen auf das Molgewicht des Siliciumdioxids mit geringer Oberfläche ist.

4. Verfahren nach Anspruch 1, wobei das Molverhältnis von ACH relativ zu dem Siliciumdioxid mit geringer Oberfläche 1,0-1,4 % bezogen auf das Molgewicht des Siliciumdioxids mit geringer Oberfläche beträgt; und wobei das Molverhältnis von Monoaminoorganosilan relativ zu Siliciumdioxid mit geringer Oberfläche 1,7-2,0 % bezogen auf das Molgewicht des Siliciumdioxids mit geringer Oberfläche beträgt.

5. Verfahren nach Anspruch 1, wobei das Aminosilan ausgewählt ist aus: 3-Aminopropyltriethoxysilan und 3-Aminopropyltrimethoxysilan, N-Methylaminopropyltrimethoxysilan, N-Ethylaminopropyltrimethoxysilan, N-Propylaminopropyltrimethoxysilan, N-Butylaminopropyltrimethoxysilan, (N, N-Diethyl-3-aminopropyl)-trimethoxysilan, (N, N-Dimethylaminopropyl)-trimethoxysilan, Bis-(2-hydroxyethyl)-3-aminopropyltriethoxysilan, N-(Hydroxyethyl)-N-methylaminopropyltrimethoxysilan oder N-Trimethoxysilylpropyl-N,N,N-trimethylammoniumchlorid.

6. Verfahren zum Herstellen eines porösen Fotobasismediums, Folgendes umfassend:
Mischen eines Aluminiumchloridhydrats (ACH) und eines Aminosilans in einer wässrigen Lösung, um eine erste Mischung auszubilden, wobei das Gewichtsverhältnis von ACH zu Aminosilan 1:1 bis 1:3 beträgt;
Mischen eines Siliciumdioxids mit geringer Oberfläche mit der ersten Mischung, um eine zweite Mischung auszubilden, wobei das Siliciumdioxid mit geringer Oberfläche eine Oberfläche von 125 bis 180 m²/g aufweist;
Dispergieren der zweiten Mischung;
Erwärmen der zweiten Mischung 1 bis 2 Stunden lang bei 60 bis 80 °C, um eine dritte Mischung mit 28-32 Gew.-% Feststoff auszubilden;
Mischen der dritten Mischung mit Komponenten, ausgewählt aus Bindemitteln, Additiven und Kombinationen daraus, um eine vierte Mischung mit einer Viskosität von 300 bis 500 cP (0,3 bis 0,5 Pa·s) bei 45 °C auszubilden, wobei die vierte Mischung 20 bis 25 Gew.-% Feststoffe ausmacht;
Auftragen der vierten Mischung auf ein Basissubstrat in einer Dicke von 15 bis 30 g/m²; und
Umwandeln des Basissubstrats mit der Schicht aus der vierten Mischung in das poröse Fotobasismedium.

7. Verfahren nach Anspruch 6, wobei das Auftragen der vierten Mischung ein Auftragen der vierten Mischung auf ein Basissubstrat in einer Dicke von 15 bis 25 g/m² umfasst.

8. Verfahren nach Anspruch 6, wobei das Molverhältnis von ACH relativ zu dem Siliciumdioxid mit geringer Oberfläche 0,5-1,5 % bezogen auf das Molgewicht des Siliciumdioxids mit geringer Oberfläche beträgt.

9. Verfahren nach Anspruch 6, wobei das Molverhältnis von Monoaminoorganosilan relativ zu Siliciumdioxid mit geringer Oberfläche 1,0-2,0 % bezogen auf das Molgewicht des Siliciumdioxids mit geringer Oberfläche beträgt.

10. Verfahren nach Anspruch 6, wobei das Molverhältnis von ACH relativ zu dem Siliciumdioxid mit geringer Oberfläche 1,0-1,4 % bezogen auf den Molgewichtsprozentsatz des Siliciumdioxids mit geringer Oberfläche beträgt; und wobei das Molverhältnis von Monoaminoorganosilan relativ zu Siliciumdioxid mit geringer Oberfläche 1,7-2,0 % bezogen auf das Molgewicht des Siliciumdioxids mit geringer Oberfläche beträgt.

11. Verfahren nach Anspruch 6, wobei das Aminosilan ausgewählt ist aus: 3-Aminopropyltriethoxysilan und 3-Aminopropyltrimethoxysilan, N-Methylaminopropyltrimethoxysilan, N-Ethylaminopropyltrimethoxysilan, N-Propylaminopropyltrimethoxysilan, N-Butylaminopropyltrimethoxysilan, (N, N-Diethyl-3-aminopropyl)-trimethoxysilan, (N, N-Dimethylaminopropyl)-trimethoxysilan, Bis-(2-hydroxyethyl)-3-aminopropyltriethoxysilan, N-(Hydroxyethyl)-N-methylaminopropyltrimethoxysilan oder N-Trimethoxysilylpropyl-N,N,N-trimethylammoniumchlorid.

12. Poröses Fotobasismedium, Folgendes umfassend:
eine zweifach behandelte Siliciumdioxidschicht, wobei die zweifach behandelte Siliciumdioxidschicht eine Viskosität von 300 bis 500 cP (0,3 bis 0,5 Pa·s) bei 45 °C aufweist, wobei die zweifach behandelte Siliciumdioxidschicht eine Dicke von 15 g/m² bis 30 g/m² aufweist, wobei die zweifach behandelte Siliciumdioxidschicht Folgendes enthält:
ein zweifach behandeltes Siliciumdioxid, wobei das zweifach behandelte Siliciumdioxid ein zweifach behandeltes Siliciumdioxid mit geringer Oberfläche ist, wobei das Siliciumdioxid mit geringer Oberfläche eine Oberfläche von 125 bis 180 m²/g aufweist, wobei das zweifach behandelte Siliciumdioxid 19 bis 26 % Feststoff in der zweifach behandelten Siliciumdioxidschicht ausmacht;
ein Bindemittel, wobei das Bindemittel 15 bis 20 Gewichtsprozent der zweifach behandelten Siliciumdioxidschicht ausmacht; und
ein Vernetzungsmittel, wobei das Vernetzungsmittel 1 bis 4 Gewichtsprozent der zweifach behandelten Siliciumdioxidschicht ausmacht.

13. Poröses Fotobasismedium nach Anspruch 12, ferner umfassend eine obere Glanzverstärkungsschicht, die auf der zweifach behandelten Siliciumdioxidschicht angeordnet ist, wobei die obere Glanzverstärkungsschicht eine Dicke von 0,2 bis 0,6 g/m² aufweist.

14. Poröses Fotobasismedium nach Anspruch 12, wobei das Molverhältnis von ACH relativ zu dem Siliciumdioxid mit geringer Oberfläche 0,5-1,5 % bezogen auf das Molgewicht des Siliciumdioxids mit geringer Oberfläche beträgt.

15. Poröses Fotobasismedium nach Anspruch 12, wobei das Molverhältnis von Monoaminoorganosilan relativ zu Siliciumdioxid mit geringer Oberfläche 1,0-2,0 % bezogen auf das Molgewicht des Siliciumdioxids mit geringer Oberfläche beträgt.

16. Poröses Fotobasismedium nach Anspruch 12, wobei das Molverhältnis von ACH relativ zu dem Siliciumdioxid mit geringer Oberfläche 1,0-1,4 % bezogen auf den Molgewichtsprozentsatz des Siliciumdioxids mit geringer Oberfläche beträgt; und wobei das Molverhältnis von Monoaminoorganosilan relativ zu Siliciumdioxid mit geringer Oberfläche 1,7-2,0 % bezogen auf das Molgewicht des Siliciumdioxids mit geringer Oberfläche beträgt.

## Revendications

1. Procédé de préparation de silice doublement traitée, comprenant :
le mélange d'hydrate de chlorure d'aluminium (ACH) et d'un aminosilane dans une solution aqueuse pour former un premier mélange, dans lequel le rapport en poids de l'ACH à l'aminosilane est de 1:1 à 1:3 ;
le mélange d'une silice de faible surface avec le premier mélange pour former un deuxième mélange, dans lequel la silice de faible surface a une zone de surface de 125 à 180 m²/g ;
la dispersion du deuxième mélange ; et
le chauffage du deuxième mélange pendant 1 à 2 heures de 60 à 80 °C pour produire un troisième mélange ayant 28 à 32 % en poids de solide et une viscosité de 50 à 200 cP (0,05 à 0,2 Pa s) à 45 °C.

2. Procédé selon la revendication 1, dans lequel le rapport molaire de l'ACH par rapport à la silice de faible surface est de 0,5 à 1,5 % sur la base du poids molaire de la silice de faible surface.

3. Procédé selon la revendication 1, dans lequel le rapport molaire du monoaminoorganosilane par rapport à la silice de faible surface est de 1,0 à 2,0 % sur la base du poids molaire de la silice de faible surface.

4. Procédé selon la revendication 1, dans lequel le rapport molaire de l'ACH par rapport à la silice de faible surface est de 1,0 à 1,4 % sur la base du poids molaire de la silice de faible surface; et dans lequel le rapport molaire du monoaminoorganosilane par rapport à la silice de faible surface est de 1,7 à 2,0 % sur la base du poids molaire de la silice de faible surface.

5. Procédé selon la revendication 1, dans lequel l'aminosilane est sélectionné parmi :
le 3-aminopropyltriéthoxysilane et le 3-aminopropyltriméthoxy-silane, le N-méthylaminopropyltriméthoxysilane, le N-éthylaminopropyltriméthoxysilane, le N-propylaminopropyltriméthoxysilane, le N-butylaminopropyltriméthoxysilane, le (N, N-diéthyl-3-aminopropyl) triméthoxysilane, le (N, N-diméthylaminopropyl) triméthoxysilane, le Bis(2-hydroxyéthyl)-3-aminopropyltriéthoxysilane, le N-(hydroxyéthyl) N-méthylaminopropyltriméthoxysilane, ou le chlorure de N-triméthoxysilylpropyl-N,N,Ntriméthylammonium.

6. Procédé de préparation d'un support poreux de photobase, comprenant :
le mélange d'hydrate de chlorure d'aluminium (ACH) et d'un aminosilane dans une solution aqueuse pour former un premier mélange, dans lequel le rapport en poids de l'ACH à l'aminosilane est de 1:1 à 1:3 ;
le mélange d'une silice de faible surface avec le premier mélange pour former un deuxième mélange, dans lequel la silice de faible surface a une zone de surface de 125 à 180 m²/g ;
la dispersion du deuxième mélange ; et
le chauffage du deuxième mélange pendant 1 à 2 heures de 60 à 80° C pour produire un troisième mélange ayant 28 à 32 % en poids de solide ;
le mélange du troisième mélange avec des composants sélectionnés parmi des liants, des additifs, et des combinaisons de ces derniers pour former un quatrième mélange ayant une viscosité de 300 à 500 cP (0,3 à 0,5 Pa s) à 45 °C, dans lequel le quatrième mélange est de 20 à 25 % en poids de solides ;
l'application du quatrième mélange sur un substrat de base à une épaisseur de 15 à 30 g/m² ; et
la conversion du substrat de base ayant la couche du quatrième mélange dans le support poreux de photobase.

7. Procédé selon la revendication 6, dans lequel l'application du quatrième mélange comprend l'application du quatrième mélange sur un substrat de base à une épaisseur de 15 à 25 g/m².

8. Procédé selon la revendication 6, dans lequel le rapport molaire de l'ACH par rapport à la silice de faible surface est de 0,5 à 1,5 % sur la base du poids molaire de la silice de faible surface.

9. Procédé selon la revendication 6, dans lequel le rapport molaire du monoaminoorganosilane par rapport à la silice de faible surface est de 1,0 à 2,0 % sur la base du poids molaire de la silice de faible surface.

10. Procédé selon la revendication 6, dans lequel le rapport molaire de l'ACH par rapport à la silice de faible surface est de 1,0 à 1,4 % sur la base du % en poids molaire de la silice de faible surface ; et dans lequel le rapport molaire du monoaminoorganosilane par rapport à la silice de faible surface est de 1,7 à 2,0 % sur la base du poids molaire de la silice de faible surface.

11. Procédé selon la revendication 6, dans lequel l'aminosilane est sélectionné parmi :
le 3-aminopropyltriéthoxysilane et le 3-aminopropyltriméthoxy-silane, le N-méthylaminopropyltriméthoxysilane, le N-éthylaminopropyltriméthoxysilane, le N-propylaminopropyltriméthoxysilane, le N-butylaminopropyltriméthoxysilane, le (N, N-diéthyl-3-aminopropyl) triméthoxysilane, le (N, N-diméthylaminopropyl) triméthoxysilane, le Bis(2-hydroxyéthyl)-3-aminopropyltriéthoxysilane, le N-(hydroxyéthyl) N-méthylaminopropyltriméthoxysilane, ou le chlorure de N-triméthoxysilylpropyl-N,N Ntriméthylammonium.

12. Support poreux de photobase comprenant :
une couche de silice doublement traitée, dans lequel la couche de silice doublement traitée a une viscosité de 300 à 500 cP (0,3 à 0,5 Pa s) à 45 °C, dans lequel la couche de silice doublement traitée a une épaisseur de 15 g/m² à 30 g/m², dans lequel la couche de silice doublement traitée comprend :
une silice doublement traitée, dans lequel la silice doublement traitée est une silice de faible surface doublement traitée, dans lequel la silice de faible surface a une zone de surface de 125 à 180 m²/g, dans lequel la silice doublement traitée est de 19 à 26 % de solide dans la couche de silice doublement traitée ;
un liant, dans lequel le liant est de 15 à 20 pour cent en poids de la couche de silice doublement traitée ; et
un réticulant, dans lequel le réticulant est de 1 à 4 pour cent en poids de la couche de silice doublement traitée.

13. Support poreux de photobase selon la revendication 12, comprenant en outre une couche d'amélioration de brillance supérieure disposée sur la couche de silice doublement traitée, dans lequel la couche d'amélioration de brillance supérieure a une épaisseur de 0,2 à 0,6 g/m².

14. Support poreux de photobase selon la revendication 12, dans lequel le rapport molaire de l'ACH par rapport à la silice de faible surface est de 0,5 à 1,5% sur la base du poids molaire de la silice de faible surface.

15. Support poreux de photobase selon la revendication 12, dans lequel le rapport molaire du monoaminoorganosilane par rapport à la silice de faible surface est de 1,0 à 2,0 % sur la base du poids molaire de la silice de faible surface.

16. Support poreux de photobase selon la revendication 12, dans lequel le rapport molaire de l'ACH par rapport à la silice de faible surface est de 1,0 à 1,4 % sur la base du % en poids molaire de la silice de faible surface; et dans lequel le rapport molaire du monoaminoorganosilane par rapport à la silice de faible surface est de 1,7 à 2,0 % sur la base du poids molaire de la silice de faible surface.
